# EUROPEAN PATENT APPLICATION

(11) **EP 3 951 383 A1**
(43) Date of publication of application: **09.02.2022**
(21) Application number: 20784130.5
(22) Date of filing: 01.04.2020
(51) Int. Cl.: G01N 30/50, B01D 15/20, B08B 9/027, G01N 30/02

(54) **GC COLUMN CLEANER**

(30) Priority: 02.04.2019 KR 20190038625
(71) Applicant: Daingl Tech Co., Ltd., Busan 46527 (KR)
(72) Inventor: PARK, Woong Ki, Yongin-si, Gyeonggi-do 16800 (KR)
(74) Representative: Gulde & Partner
(86) International application number: PCT/KR2020/004444
(87) International publication number: WO 2020/204592

(57) **Abstract**

A GC column cleaner according to the present invention is characterized by comprising: an input unit to which attribute information about a GC column to be cleaned is input; a cleaning bottle, one side of which is supplied with a cleaning solution and a cleaning gas for cleaning the GC column, and the other side of which is connected to an end portion of one side of the GC column; a cleaning solution supply unit for supplying the cleaning solution to the cleaning bottle; a cleaning gas supply unit for supplying the cleaning gas to the cleaning bottle; and a control unit for controlling the operation of the cleaning solution supply unit and the cleaning gas supply unit according to the attribute information input to the input unit.

## Description

### [Technical Field]

The present invention relates to a gas chromatography (GC) column cleaner, and more specifically, a GC column cleaner for removing contaminants remaining in a tube of the GC column in order to more efficiently reuse the GC column.

### [Background Art]

Chromatography is a method of separating each component in a mixture using an appropriate stationary phase and mobile phase and is an analysis method using a principle that each component in the mixture has different movement rates depending on attributes of a material when passing through a tube of a gas chromatography (GC) column.

A GC device using a gas as the mobile phase for the analysis method is one of widely used instruments in analytical chemistry laboratories.

In general, the GC device may have a structure including a carrier gas, a sample injector, a GC column, a detector, and the like, as disclosed in Patent Document 1 below.

Among these components, the GC column generally has a spirally formed capillary tube shape and is used in connection with the detector, and the detector can detect each component that has passed through the GC column in a gaseous state.

While the GC column has a capillary tube length of 5 to 150 m, in general, a length of 10 to 100 m is used, and in particular, a length of 15 to 60 m is the most used. Moreover, an average inner diameter of the capillary tube is in a range of about 0.1 to 0.75 mm although there is a slight difference according to a production supplier.

In general, the GC column may separate a material to be analyzed using a difference in the movement rates of each component, this separation process may be determined by distribution, adsorption, desorption, or the like between each sample component and a stationary phase, and for example, in the case of a GC column using a distribution characteristic, a polymer-type liquid for distribution of a material to be analyzed is applied with a constant thickness on an inside of a capillary tube.

Among the GC columns that separate the material to be analyzed in the above-described manner, in particular, a capillary tube-type GC column has excellent resolution and sensitivity but is relatively expensive. Accordingly, in order to prevent an increase in analysis costs due to frequent replacement of the GC column, GC columns need to be reused repeatedly.

However, when the GC column is repeatedly reused as described above, there is a problem in that an analysis result is inaccurate due to contaminants remaining in the capillary tube in the previous analysis step. Therefore, in order to obtain an accurate analysis result even when repeatedly reusing the GC column, it is necessary to completely remove contaminants remaining in the GC column after sample analysis.

However, in the GC columns, an inner diameter and a length of the capillary tube and the type of material applied on the inside of the capillary tube may be different depending on the manufacturer, and the type of analysis sample may be different even in the case of the same type of GC column. For this reason, in order to completely remove internal contaminants from the GC column to be cleaned, it is necessary to use a dedicated cleaning device and/or a dedicated cleaning solution that is classified according to the type of GC column and/or analysis sample, and thus, there is a problem that it is difficult to actively reuse the GC column.

Therefore, it is necessary to develop a device capable of automatically setting the type of cleaning solution and cleaning method suitable for the GC column according to specifications of the corresponding GC column to be cleaned and/or the type of analysis sample to perform cleaning in which contaminants remaining inside the capillary tube of the GC column to be cleaned are effectively removed.

[Patent Document 1] Korean Patent Registration No. 10-1794669 (registered on Nov. 1, 2017)

### [Disclosure]

### [Technical Problem]

As described above, the present invention relates to a column cleaner for reuse of a gas chromatography (GC) column and is directed to providing a GC column cleaner capable of automatically setting the type of cleaning solution, an input amount of the cleaning solution, a cleaning time, or the like according to attribute information (manufacturer, inner diameter of tube, length of tube, type of inner coating material, the type of analysis sample used, or the like) on the GC column input by a user to perform cleaning in which non-volatile contaminants remaining on an inner wall of a tube of the GC column are effectively removed.

### [Technical Solution]

One aspect of the present invention provides a gas chromatography (GC)column cleaner including: an input unit to which attribute information on a GC column to be cleaned is input; a cleaning bottle having one side to which a cleaning solution and a cleaning gas for cleaning the GC column are supplied and the other side to which one end portion of the GC column is connected; a cleaning solution supply unit configured to supply the cleaning solution to the cleaning bottle; a cleaning gas supply unit configured to supply the cleaning gas to the cleaning bottle; and a control unit configured to control operations of the cleaning solution supply unit and the cleaning gas supply unit according to the attribute information input to the input unit.

The control unit may first supply a cleaning solution corresponding to a preset input amount to the cleaning bottle, and then, supply the cleaning gas to the cleaning bottle for a preset supply time so that the cleaning solution in the cleaning bottle is injected into the GC column by a pressure of the cleaning gas to perform cleaning.

The control unit may set at least one of the input amount of the cleaning solution, a supply pressure of the cleaning gas, and the supply time of the cleaning gas according to the input attribute information, and the attribute information may include at least one of a manufacturer of the GC column, an inner diameter of a GC column tube, a length of the GC column tube, a type of inner coating material of the GC column tube, and a type of analysis sample used.

The cleaning solution supply unit may supply any one of a plurality of types of cleaning solutions, and the control unit may control the operation of the cleaning solution supply unit so that the type of cleaning solution determined by the attribute information is supplied to the cleaning bottle.

The cleaning solution supply unit may include a plurality of first supply pipes each having one end portion connected to one of storage tanks containing different types of cleaning solutions, a second supply pipe having one end portion connected to the other end portions of the first supply pipes and the other end portion connected to the cleaning bottle, a flow path selection member provided at a connection portion between the first supply pipes and the second supply pipe and connects the first and second supply pipes so that any one of the plurality of types of cleaning solutions is selectively supplied to the second supply pipe, and a pump provided in a middle of the second supply pipe to supply the cleaning solution supplied to the second supply pipe to the cleaning bottle.

The cleaning gas supply unit may include a third supply pipe having one end portion connected to the cleaning gas storage tank and the other end portion connected to the cleaning bottle, and an on/off valve provided in a middle of the third supply pipe to control the supply of the cleaning gas.

The control unit may control operations of the pump and on/off valve to adjust at least one of the input amount of the cleaning solution and the supply time of the cleaning gas.

The GC column cleaner may further include a constant temperature chamber in which the GC column is accommodated, and a heater configured to heat an inside of the constant temperature chamber, in which both end portions of the GC column are exposed to an outside of the constant temperature chamber and any one of both of the end portions may be connected to one side of the cleaning bottle, and the control unit may control the heater so that the constant temperature chamber is maintained within a preset temperature range.

### [Advantageous Effects]

As described above, according to an gas chromatography (GC) column cleaner of the present invention, it is possible to automatically set a cleaning method suitable for a GC column to be cleaned according to attribute information (manufacturer of GC column, inner diameter of tube, length of tube, type of inner coating material, type of analysis sample used, or the like) of the CG column input by a user, remove contaminants remaining inside the GC column, and efficiently clean and reuse the GC column by automating most of the cleaning process.

In addition, according to the GC column cleaner of the present invention, it is possible to completely remove contaminants flowing into the column and remaining therein for each sample analysis without damage or loss of a material applied on the inside of the column using a liquid cleaning solution and a gaseous cleaning gas and thus significantly reduce analysis costs by increasing the number of times of repeated reuse of the GC column as well as obtain accurate analysis results even when the GC column is repeatedly reused.

### [Description of Drawings]

FIG. 1 is a diagram illustrating the overall configuration of a gas chromatography (GC) column cleaner according to one embodiment of the present invention.
FIG. 2 is a control block diagram of the GC column cleaner illustrated in FIG. 1.

### [Modes of the Invention]

The above and other objects and novel features of the present invention will become more apparent from the description of the present specification and accompanying drawings.

Hereinafter, specific embodiments of the present invention will be described in detail with reference to the accompanying drawings.

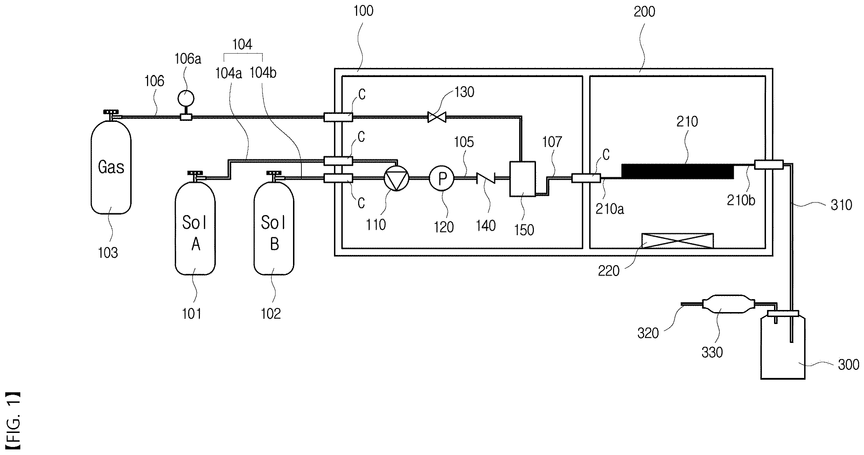

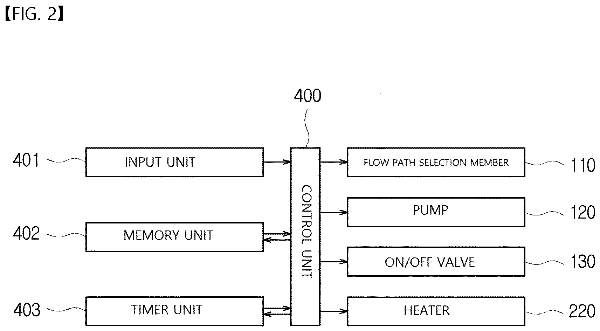

FIG. 1 is a diagram illustrating the overall configuration of a gas chromatography (GC) column cleaner according to one embodiment of the present invention, and FIG. 2 is a control block diagram of the GC column cleaner illustrated in FIG. 1.

As illustrated in FIG. 1, the GC column cleaner according to one embodiment of the present invention includes a cleaning bottle 150 provided in a GC column cleaner body 100, a cleaning solution supply unit that supplies a cleaning solution to the cleaning bottle 150, and a cleaning gas supply unit that supplies a cleaning gas to the cleaning bottle 150.

In addition, in the cleaning bottle 150, the cleaning solution and the cleaning gas for cleaning a GC column 210 to be cleaned are supplied to one side of the cleaning bottle 150, and one end portion of the GC column 210 is connected to the other side of the cleaning bottle 150.

The cleaning solution supply unit of the GC column cleaner of the present invention may have a structure including cleaning solution storage tanks 101 and 102, and first and second supply pipes 104 and 105 and a pump 120 for supplying a cleaning solution.

It is preferable that the cleaning solution storage tanks 101 and 102 store different types of cleaning solutions in consideration of the type of GC column distributed on the market or the type of analysis sample using the GC column.

In the present embodiment, as an example illustrated in FIG. 1, a case in which the cleaning solution storage tank includes two storage tanks such as the first cleaning solution storage tank 101 and the second cleaning solution storage tank 102 is illustrated but the present invention is not limited thereto. That is, if necessary, the cleaning solution storage tanks may be provided in a number matching the number of types of cleaning solution.

In addition, if necessary, one of the cleaning solutions stored in the cleaning solution storage tanks 101 and 102 may be a rinse solution. That is, in the case of the GC column 210 requiring a rinse after cleaning, when a rinse add function is selected before cleaning, the rinse process can be performed by transferring the rinse solution to the cleaning bottle 150 after cleaning.

In this case, whether to use the rinse solution may be selected differently depending on the type of GC column to be cleaned and/or the type of analysis sample using the GC column.

Therefore, in the specification and claims of the present invention, the term "cleaning solution" is a concept that includes various types of liquid cleaning materials used for removing contaminants remaining inside the tube of the GC column as well as the rinse solution.

In the present embodiment, for example, a mixed solution of hexane (n-hexane), methylene chloride (dichloromethane), and methanol may be used as the cleaning solution, and hexane (n-hexane) may be used as the rinse solution.

In addition, in the specification and claims of the present invention, the "tube of the GC column" or the "tube" is a concept that includes not only a capillary tube-shaped GC column tube described as an example of the present embodiment, but also any GC column tube that can be cleaned with a liquid or gaseous cleaning material.

Meanwhile, when there are two cleaning solution storage tanks described above, the first supply pipe 104 for supplying the cleaning solution includes two pipes. One end portion of each pipe is connected to each of the cleaning solution storage tanks 101 and 102 containing different cleaning solutions, and the other end portion of each pipe is connected to one end portion of the second supply pipe 105.

In addition, a flow path selection member 110 is installed in a connection portion between a plurality of first supply pipes 104a and 104b and the second supply pipe 105 so that any one of the plurality of cleaning solutions is selectively supplied to the second supply pipe 105.

In addition, the other side of the second supply pipe 105 not connected to the first supply pipes 104a and 104b is connected to the cleaning bottle 150, and the pump 120 is installed in the middle of the second supply pipe 105 to supply an appropriate amount of cleaning solution to the cleaning bottle 150.

Next, the cleaning gas supply unit of the GC column cleaner of the present invention includes a cleaning gas storage tank 103, a third supply pipe 106 for supplying the cleaning gas, and an on/off valve 130 provided in the middle of the third supply pipe 106 to control the supply of a cleaning gas. Moreover, a control unit 400 to be described below may control the on/off valve 130 to adjust a supply amount and/or a supply time of the cleaning gas.

As the cleaning gas stored in the cleaning gas storage tank 103, it is preferable to use a gas such as an inert gas or nitrogen that does not easily react with sample components and volatilizes well within a cleaning temperature range after cleaning. In the present embodiment, for example, nitrogen is used, which has low reactivity with sample components, is well volatilized within the cleaning temperature range, and is relatively inexpensive.

In addition, as illustrated in FIG. 1, a pressure regulating member 106a may be further provided in the middle of the third supply pipe 106 for supplying the cleaning gas, and the control unit 400 described below controls the pressure regulating member 106a to adjust a supply pressure of the cleaning gas supplied to the cleaning bottle 150.

In this case, preferably, the supply pressure of the cleaning gas is set higher than atmospheric pressure, and for example, the supply pressure of the cleaning gas may be in a range of 20 to 30 psi.

Next, the operation of the GC column cleaner according to one embodiment of the present invention configured as described above will be described. First, a cleaning solution corresponding to a preset input amount is supplied to the cleaning bottle 150 through the cleaning solution supply unit, and then, the cleaning gas is supplied to the cleaning bottle 150 through the cleaning gas supply unit so that the cleaning solution is injected into the tube of the GC column 210 by the pressure of the cleaning gas to perform cleaning.

In this case, preferably, a check valve 140 is installed between the cleaning bottle 150 and the pump 120 in the middle of the second supply pipe 105 for supplying the cleaning solution. Accordingly, when the cleaning gas is supplied into the cleaning bottle 150, the check valve 140 prevents the cleaning solution or the cleaning gas from flowing back toward the cleaning solution storage tanks 101 and 102.

In addition, preferably, the second supply pipe 105 for supplying the cleaning solution to the cleaning bottle 150 is positioned on one side of a side surface of the cleaning bottle 150 so that the cleaning solution is smoothly stored in the cleaning bottle 150.

In addition, preferably, the third supply pipe 106 for supplying the cleaning gas is located at an upper portion of the cleaning bottle 150 so that the cleaning solution inside the cleaning bottle 150 can be injected into the tube of the GC column 210 by the pressure of the cleaning gas.

Moreover, preferably, a fourth supply pipe 107 for injecting the cleaning solution into the tube of the GC column 210 from the cleaning bottle 150 is located at a lower portion of the cleaning bottle 150 or a lower portion of the side surface of the cleaning bottle 150 so that the cleaning gas is injected after all amount of the cleaning solution input to the cleaning bottle 150 is injected into the tube of the GC column.

Meanwhile, the GC column cleaner according to one embodiment of the present invention is configured so that a user can input attribute information of the GC column 210 before cleaning starts.

In this case, the attribute information of the GC column 210 may be at least one of a manufacturer of the GC column, an inner diameter of the GC column tube, a length of the GC column tube, the type of inner coating material of the GC column, and the type of analysis sample used.

In addition, the GC column cleaner according to the present invention operates differently according to the attribute information of the GC column input by the user. Specifically, as will be described below, the type of cleaning solution used during a cleaning operation, an input amount of the cleaning solution, the supply pressure of the cleaning gas, a supply time of the cleaning gas, a temperature of a constant temperature chamber, or the like may be set differently.

Accordingly, the control unit 400 to be described below controls the flow path selection member 110 to inject a predetermined cleaning solution from among a plurality of cleaning solutions according to the attribute information of the GC column 210 input by the user and controls the operation of the pump 120 so that a predetermined input amount of the cleaning solution is supplied to the cleaning bottle 150.

In addition, the control unit 400 to be described below may control the on/off valve 130 according to the attribute information of the GC column 210 to adjust the supply time of the cleaning gas injected into the cleaning bottle 150 and control the pressure regulating member 106a installed in the middle of the third supply pipe 106 to adjust the supply pressure of the cleaning gas.

Moreover, the control unit 400 to be described below may control a heater 220 during the injection process of the cleaning solution and the cleaning gas to adjust a temperature of a constant temperature chamber 200.

Accordingly, as much as a preset input amount of the cleaning solution suitable for the GC column to be cleaned is injected into the GC column 210 through the cleaning bottle 150, and after the injection of the cleaning solution is completed, the cleaning gas is supplied for as much as the preset supply time at the preset supply pressure, and thus, the overall cleaning time is determined.

Therefore, the GC column cleaner according to the present invention can remove contaminants by a method suitable for each GC column according to at least one piece of GC column attribute information among the manufacturer of the GC column, the inner diameter of the GC column tube, the length of the GC column tube, the type of inner coating material of the GC column tube, and the type of analysis sample used, and can effectively clean and reuse the GC column by automating most of the process.

In addition, the heater 220 for heating the inside of the constant temperature chamber may be further provided inside the constant temperature chamber 200 in which the GC column 210 is accommodated. In this case, both end portions of the GC column 210 are exposed to the outside of the constant temperature chamber 200, and any one of both end portions is connected to one side of the cleaning bottle 150.

In addition, the GC column 210 inside the constant temperature chamber 200 needs to be maintained at an appropriate temperature for cleaning. For this purpose, in the present invention, the heater 220 is controlled so that the constant temperature chamber 200 is maintained in a preset temperature range, and preferably, the temperature may be maintained in the range of room temperature to 80 °C.

In addition, in both end portions of the GC column 210, the other end portion not connected to the cleaning bottle 150 may be connected to a discharge line 310 through which the cleaning solution and cleaning gas after cleaning are discharged.

The cleaning solution (including cleaning gas) after cleaning discharged through the discharge line 310 can be easily volatilized in a laboratory, and in this case, volatile organic solvents (especially dichloromethane) in the laboratory adversely affect a lab worker's health. Accordingly, in order to solve this problem, by installing a carbon trap 330 on a vent 320 connected to a discharge bottle 300, it is possible to prevent harmful volatile organic solvents from leaking into the laboratory.

Through this process, the GC column cleaner according to the present invention can be used safely when cleaning, and it is possible to completely remove the contaminants that remain inside the GC column and seriously affect the reliability of the analysis result, and thus, it is possible to obtain accurate and reliable analysis data even when the GC column is repeatedly reused.

Meanwhile, in the case of the GC column cleaner according to the present invention described above, preferably, a coupler C (or adapter) is used for preventing leakage at the connection portion between the supply pipes of the cleaning solution or cleaning gas, the connection portion between the cleaning solution or cleaning gas supply pipe and the cleaning bottle, the cleaning solution or cleaning gas supply pipe and the GC column, and/or a connection portion between other main bodies or a wall of the constant temperature chamber and the supply pipe or the GC column.

In this case, the coupler C may be preferably implemented using a conventional connection material used for connection of a pipe or tube in the chemical field or mechanical field. In the present invention, in order to connect the GC column tube having various inner diameters (0.1 mm, 0.2 mm, 0.25 mm, 0.32 mm, 0.53 mm, or the like in the present embodiment) to the cleaning solution or cleaning gas supply pipe (in the present embodiment, inner diameter of 1/16") without leakage, the coupler C is made of a flexible and elastic material in which the diameter of the tube insertion hole can be expanded and contracted according to the size of the inner diameter (or outer diameter) of the tube.

The GC column cleaner of the present invention includes the control unit 400 that controls the overall operation of the device as described above, and the control unit 400 controls the operations of the flow path selection member 110, the pump 120, the on/off valve 130, the heater 220, the pressure regulating member 106a, and the like of the GC column cleaner, using an operation program stored in a memory unit 402 according to the attribute information of the GC column input to an input unit 401.

When the user intends to clean the GC column to be cleaned, first, the user inputs the attribute information (any one of the manufacturer of the GC column, the inner diameter of the GC column tube, the length of the GC column tube, the type of inner coating material of the GC column tube, and the type of analysis sample used) on the GC column 210 to be cleaned, through the input unit 401.

The control unit 400 may bring appropriate operation information of the GC column cleaner from the memory unit 402 according to the attribute information of the GC column input from the input unit 401, and for example, the operation information includes at least one of the type of cleaning solution, the input amount of the cleaning solution, the supply pressure of the cleaning gas, the supply time of the cleaning gas, and the temperature of the constant temperature chamber which are suitable for the corresponding GC column.

In addition, when the user intends to clean a new type of GC column not stored in the memory unit 402, the control unit 400 may receive operation information according to the corresponding attribute information through the input unit 401 and store the received operation information in the memory unit 402.

After the control unit 400 reads the operation information, the control unit 400 selects the type of cleaning solution suitable for the GC column to be cleaned by controlling the flow path selection member 110 and controls the pump 120 to adjust the input amount of the cleaning solution.

Then, when the cleaning bottle 150 is filled with a predetermined amount of cleaning solution, the control unit 400 controls the on/off valve 130 of the cleaning gas supply unit to open the on/off valve 130 to adjust the cleaning gas supply time. In this case, by adjusting the cleaning gas supply time, the overall cleaning time during cleaning of the GC column 210 may be adjusted.

In this way, when the cleaning gas is supplied to the cleaning bottle 150, the cleaning solution inside the cleaning bottle 150 is injected into the GC column 210 through the third supply pipe 106 by the pressure of the additionally filling gas.

The GC column cleaner of the present invention may further include a timer unit 403, and the control unit 400 may adjust the cleaning gas supply time (or the total cleaning time) appropriate for the GC column using the timer unit 403 according to the operation information read from the memory unit 402.

In addition, the control unit 400 controls the heater 220 to maintain the constant temperature chamber 200 in a preset temperature range, and thus, the GC column 210 is cleaned within a suitable temperature such that it is possible to increase the efficiency of the cleaning operation.

According to the operation of the control unit 400, the GC column cleaner of the present invention divides the GC column to be cleaned into various types according to the manufacturer, the inner diameter of the tube, the length of the tube, the type of coating agent inside the tube, the type of analysis sample used, or the like. Accordingly, it is possible to automatically adjust the type of cleaning solution suitable for cleaning the GC column, the input amount of the cleaning solution, whether to use the rinse, the cleaning time, the supply time of the cleaning gas, the supply pressure of the cleaning gas, the temperature of the constant temperature chamber, or the like, and thus it is possible to effectively remove the contaminants in a manner most appropriate for each GC column.

### [Industrial Applicability]

A gas chromatography (GC) column cleaner according to the present invention can be applied to the analytical chemistry field using gas chromatography.

## Claims

1. A gas chromatography (GC) column cleaner comprising:
an input unit to which attribute information on a GC column to be cleaned is input;
a cleaning bottle having one side to which a cleaning solution and a cleaning gas for cleaning the GC column are supplied and the other side to which one end portion of the GC column is connected;
a cleaning solution supply unit configured to supply the cleaning solution to the cleaning bottle;
a cleaning gas supply unit configured to supply the cleaning gas to the cleaning bottle; and
a control unit configured to control operations of the cleaning solution supply unit and the cleaning gas supply unit according to the attribute information input to the input unit.

2. The GC column cleaner of claim 1, wherein the control unit first supplies a cleaning solution corresponding to a preset input amount to the cleaning bottle, and then, supplies the cleaning gas to the cleaning bottle for a preset supply time so that the cleaning solution in the cleaning bottle is injected into the GC column by a pressure of the cleaning gas to perform cleaning.

3. The GC column cleaner of claim 2, wherein the control unit sets at least one of the input amount of the cleaning solution, a supply pressure of the cleaning gas, and the supply time of the cleaning gas according to the input attribute information, and
the attribute information includes at least one of a manufacturer of the GC column, an inner diameter of a GC column tube, a length of the GC column tube, a type of inner coating material of the GC column tube, and a type of analysis sample used.

4. The GC column cleaner of any one of claims 1 to 3, wherein the cleaning solution supply unit supplies any one of a plurality of types of cleaning solutions, and
the control unit controls the operation of the cleaning solution supply unit so that the type of cleaning solution determined by the attribute information is supplied to the cleaning bottle.

5. The GC column cleaner of claim 4, wherein the cleaning solution supply unit includes:
a plurality of first supply pipes each having one end portion connected to one of storage tanks containing different types of cleaning solutions;
a second supply pipe having one end portion connected to the other end portions of the first supply pipes and the other end portion connected to the cleaning bottle;
a flow path selection member which is provided at a connection portion between the first supply pipes and the second supply pipe and connects the first and second supply pipes so that any one of the plurality of types of cleaning solutions is selectively supplied to the second supply pipe; and
a pump provided in a middle of the second supply pipe to supply the cleaning solution supplied to the second supply pipe to the cleaning bottle.

6. The GC column cleaner of claim 5, wherein the cleaning gas supply unit includes:
a third supply pipe having one end portion connected to the cleaning gas storage tank and the other end portion connected to the cleaning bottle; and
an on/off valve provided in a middle of the third supply pipe to control the supply of the cleaning gas.

7. The GC column cleaner of claim 6, wherein the control unit controls operations of the pump and on/off valve to adjust at least one of the input amount of the cleaning solution and the supply time of the cleaning gas.

8. The GC column cleaner of any one of claims 1 to 3, further comprising:
a constant temperature chamber in which the GC column is accommodated; and
a heater configured to heat an inside of the constant temperature chamber,
wherein both end portions of the GC column are exposed to an outside of the constant temperature chamber and any one of both of the end portions is connected to one side of the cleaning bottle, and
the control unit controls the heater so that the constant temperature chamber is maintained within a preset temperature range.
